(19)

**Europäisches Patentamt**

**European Patent Office**

**Office européen des brevets**

(11) **EP 4 342 749 B1**

(12) **EUROPEAN PATENT SPECIFICATION**

(45) Date of publication and mention
of the grant of the patent:
**25.12.2024 Bulletin 2024/52**

(21) Application number: **22196826.6**

(22) Date of filing: **21.09.2022**

(51) International Patent Classification (IPC):
**B60T 7/22** $^{(2006.01)}$      **B60T 8/172** $^{(2006.01)}$

(52) Cooperative Patent Classification (CPC):
**B60T 8/172; B60T 7/22;** B60T 2210/12

(54) **METHOD FOR DETERMINING A BRAKING DISTANCE ESTIMATE FOR A VEHICLE, METHOD FOR OPERATING A DRIVER ASSISTANCE SYSTEM OF A VEHICLE, DATA PROCESSING APPARATUS AND COMPUTER PROGRAM**

VERFAHREN ZUM ERMITTELN EINER BREMSWEGSCHÄTZUNG FÜR EIN FAHRZEUG, VERFAHREN ZUM BETREIBEN EINES FAHRERASSISTENZSYSTEMS EINES FAHRZEUGS, DATENVERARBEITUNGSVORRICHTUNG UND COMPUTERPROGRAMM

PROCÉDÉ DE DÉTERMINATION D'UNE ESTIMATION DE DISTANCE DE FREINAGE POUR UN VÉHICULE, PROCÉDÉ DE FONCTIONNEMENT D'UN SYSTÈME D'ASSISTANCE AU CONDUCTEUR D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.03.2024 Bulletin 2024/13**

(73) Proprietor: **Volvo Car Corporation
405 31 Göteborg (SE)**

(72) Inventors:
• **KARYOTAKIS, Ektor
40531 Göteborg (SE)**
• **YANG, Derong
40531 Göteborg (SE)**
• **JONASSON, Mats
40531 Göteborg (SE)**
• **SJÖBERG, Jonas
40531 Göteborg (SE)**

(74) Representative: **Maiwald GmbH
Engineering
Elisenhof
Elisenstrasse 3
80335 München (DE)**

(56) References cited:
**WO-A1-2022/140660      CN-A- 115 027 428
KR-A- 20210 031 659**

**Description**

The present invention relates to a method for determining a braking distance estimate for a vehicle travelling along a trajectory on a roadway at a known current vehicle speed. The braking distance estimate is an estimate of a distance along the trajectory needed by the vehicle for reducing the current vehicle speed to a target vehicle speed while a braking system is activated.

Additionally, the present invention is directed to a method for operating a driver assistance system of a vehicle.

Furthermore, the present invention relates to a data processing apparatus comprising means for carrying out the steps of at least one of the above methods.

Also, the present invention is directed to a computer program comprising instructions which, when the program is executed by a computer, cause the computer to carry out the steps of at least one of the above methods.

In the present context, reducing the current vehicle speed to a target vehicle speed means that the braking system of the vehicle is activated until the target vehicle speed is reached. The target vehicle speed is inferior to the current vehicle speed. The target vehicle speed can be zero, i.e. the vehicle is to be stopped. Alternatively, the target vehicle speed can be above zero. This means that the vehicle is to be decelerated without stopping.

It is known that friction between the wheels of the vehicle which are coupled to the braking system and the roadway has an important influence on the braking distance that is needed for reaching the target vehicle speed. For this reason, it is known to use a friction estimate when determining a braking distance estimate. The friction estimate may for example depend on the type of roadway which lies ahead of the vehicle.

WO 2022/140660 A1 provides a method for providing terrainbased insights to a terrain-based advanced driver assistance system of a vehicle. The method includes obtaining a road profile of a road segment the vehicle is traveling on, determining a location of the vehicle based at least partly on the road profile, and determining one or more operating parameters of one or more vehicle systems based at least partially on the location of the vehicle.

It is an objective of the present invention to improve known methods for determining a braking distance estimate. Especially, an accuracy of a braking distance estimates shall be increased.

The problem is at least partially solved or alleviated by the subject matter of the independent claim 1 of the present invention, wherein further examples are incorporated in the dependent claims.

According to a first aspect, there is provided a method for determining a braking distance estimate for a vehicle travelling along a trajectory on a roadway at a known current vehicle speed. The braking distance estimate is an estimate of a distance along the trajectory needed by the vehicle for reducing the current vehicle speed to a target vehicle speed while a braking system is activated. The method comprises:

- receiving a friction information for each of a plurality of trajectory segments lying ahead of the vehicle, wherein the friction information comprises a segment-specific friction coefficient and wherein a length of each trajectory segment is known,
- calculating a segment end speed for each trajectory segment of a connected subset of the plurality of trajectory segments starting from a starting segment being located adjacent to the vehicle until for an end segment a segment end speed is determined which equals the target vehicle speed or is lower than the target vehicle speed, wherein calculating a segment end speed for each trajectory segment of a connected subset of the plurality of trajectory segments is based on the corresponding friction information,
- determining an intra-segment length within the end segment, wherein the intra-segment length defines a position where the vehicle has the target vehicle speed, and
- determining the braking distance estimate as the sum of the lengths of the trajectory segments having a segment end speed exceeding the target vehicle speed and the intra-segment length.

In this context, a trajectory segment is a portion of a trajectory on the roadway on which the vehicle travels. A plurality of trajectory segments means at least two trajectory segments. Preferably, the plurality of trajectory segments refers to at least three trajectory segments and more preferably to at least five trajectory segments. Each trajectory segment is characterized by a friction coefficient and a length. Thus, different friction estimate information may be provided for each of the trajectory segments. Consequently, for determining a braking distance estimate, friction information of high accuracy may be used. For each trajectory segment, influences on the friction coefficient such as weather conditions and road conditions can be taken into account.

The calculated segment end speeds are estimates or predictions of the speed that the vehicle has at the respective end of each segment. The relevant end of the segments is the distal end with respect to the vehicle, i.e. the most remote end of the segment. For the calculation of the segment end speeds, the received segment-specific friction information is used. A connected subset of trajectory segments relates to an uninterrupted traveling path of the vehicle. The subset may comprise all trajectory segments or a portion of the trajectory segments.

The calculation of the segment end speeds may be designated as iterative, if the same formula is applied several times, e.g. for each trajectory segment.

In a case in which the segment end speed corresponds to the target vehicle speed, the braking distance estimate is the sum of the lengths of the trajectory segments that the vehicle needs to travel on until it reaches the target vehicle speed. In a case in which for an end segment, the segment end speed is inferior to the target vehicle speed, it is determined that the vehicle reaches the target vehicle speed within the end segment. The exact position is determined by calculating the intra-segment length.

Thus, using the present method, very detailed, and consequently realistic, friction information may be used for determining a braking distance estimate. Consequently, the braking distance estimate can be determined in a very accurate manner.

In an example, the friction information for all or some trajectory segments is continuously updated. Thus, the friction information is always up to date. The friction information may be received from a vehicle sensor or from a service provider, e.g. via a cloud infrastructure. Consequently, also in situations comprising changing influences on the friction information, e.g. changing weather conditions, the high accuracy of the braking distance estimate is maintained.

In an example, calculating the segment end speed for each trajectory segment of the connected subset of the plurality of trajectory segments comprises applying a balance of energy for each of the trajectory segments of the subset. This balance of energy comprises the kinetic energy of the vehicle at both ends of the trajectory segment and friction energy associated with a travel over the trajectory segment. Optionally also air resistance energy may be considered. Using the energy balance, the segment end speed may be calculated in a computationally efficient and accurate manner.

In an example, determining the intra-segment length comprises applying a balance of energy. This balance of energy also comprises the kinetic energy of the vehicle at both ends of the trajectory segment and friction energy associated with a travel over the trajectory segment. It is noted that for this balance of energy, the segment end speed is known. Again, optionally, also air resistance energy may be considered. Thus, the intra-segment length may be calculated in a computationally efficient and accurate manner.

In an example, the friction information is received in the form of a friction map. The friction map comprises the trajectory having at least the above-mentioned plurality of trajectory segments lying ahead of the vehicle. Of course, the friction map may also comprise friction information going beyond that. In an example, the friction map is combined with a map used in a navigational system. In other words, friction information forms part of a map used in a navigational system. Consequently, the friction information may be provided and computationally processed in a simple and reliable manner.

In an example, the friction information comprises a friction uncertainty information. In other words, the friction information comprises a measure concerning the reliability of the friction coefficient. Based on such friction uncertainty information, a reliability or uncertainty of a braking distance estimate being based thereon, can be determined.

In an example, the friction uncertainty information comprises a friction deviation measure. For example, the friction deviation measure is a standard deviation associated with the friction coefficient. More generally speaking, the friction deviation measure defines an interval adjacent to the associated friction coefficient into which the friction coefficient may deviate. The deviation measure may comprise a positive deviation measure and/or a negative deviation measure. Thus, the uncertainty information may be different on different sides of a friction coefficient. Consequently, the friction uncertainty information is provided in an understandable manner. Moreover, such a friction uncertainty information can be processed in a simple and efficient manner.

In an example, the method further comprises determining a braking distance uncertainty information based on the friction uncertainty information. Thus, when determining the braking distance estimate, the friction uncertainty information is taken into account such that a braking distance uncertainty information results. In other words, considering the reliability of the friction information, a reliability of the braking distance estimate may be calculated based thereon.

In an example, determining a braking distance uncertainty information comprises:

- calculating a segment end speed for each trajectory segment of a connected subset of the plurality of trajectory segments starting from the starting segment located adjacent to the vehicle, until for an end segment a segment end speed is determined which equals the target vehicle speed or is lower than the target vehicle speed, wherein a lower friction coefficient is used for each trajectory segment, and

- calculating a segment end speed for each trajectory segment of a connected subset of the plurality of trajectory segments starting from the starting segment located adjacent to the vehicle, until for an end segment a segment end speed is determined which equals the target vehicle speed or is lower than the vehicle target speed, wherein a higher friction coefficient is used for each trajectory segment.

In other words, in a first step, the segment end speeds are calculated, wherein, considering the friction information uncertainty, a comparatively low or the lowest available friction coefficient is used. This means that for each trajectory segment the segment end speed will be comparatively high resulting in a comparatively long braking distance estimate. In a second step, the segment end speeds are calculated, wherein, considering the friction information uncertainty, a comparatively high or the highest available friction coefficient is used. This means that for each trajectory segment the segment end speed will be comparatively low. This results in a comparatively short braking distance estimate. Taking the results of the first and second step together, a bandwidth or range may be calculated for the braking distance estimate. A magnitude of the bandwidth may be used as a measure of uncertainty for the braking distance estimate.

In an example, the method further comprises triggering a reduction of the current vehicle speed or requesting friction information comprising a friction uncertainty information relating to a reduced uncertainty, if the braking distance uncertainty information exceeds a predefined braking distance uncertainty threshold. In simplified words, if the uncertainty of the determined braking distance estimate is too high, a speed reduction is triggered for the vehicle. This has two effects. The first effect is that at a lower speed, an uncertainty of a braking distance estimate, e.g. a bandwidth or variation of the braking distance estimate, is lower than at a higher vehicle speed. This also applies if the same friction information having the same uncertainty is used. The second effect is that traveling safety is generally increased when traveling at a lower speed. Alternatively or additionally to triggering a speed reduction, friction information comprising a friction uncertainty information relating to reduced uncertainty, i.e. more accurate friction information, may be requested. This measure also reduces the braking distance uncertainty.

In an example, the method further comprises storing the braking distance estimate. Consequently, the braking distance estimate is available for future calculations. This is especially important in the context of continuously updating a braking distance estimate. If this can be done based on stored braking distance estimates, i.e. historic braking distance estimates, the computational efficiency may be increased, since then contributions of trajectory segments for which a friction information has changed may be withdrawn, recalculated and added in amended form. This is more efficient than recalculating the braking distance estimate from the beginning, i.e. considering the friction information of every trajectory segment. It is noted that the increase computational efficiency is of special importance, since it may be necessary to calculate a braking distance estimate several times per second. It is also possible to store intermediate calculation results which are related to single trajectory segments. Optionally, also the braking distance uncertainty information is stored. The stored braking distance uncertainty corresponds to the stored braking distance estimate, i.e. describes the uncertainty associated with the braking distance estimate. In other words, the reliability of the stored braking distance estimate is also stored.

According to a second aspect, there is provided a method for operating a driver assistance system of a vehicle. The method comprises:

- receiving a braking distance estimate having been determined using the method of the claimed invention or determining a braking distance estimate using the method of the claimed invention,

- calculating a trigger distance as a sum of the braking distance estimate and a safety distance,
- receiving or determining an obstacle distance being a distance between the vehicle and an obstacle, and
- triggering an action if the obstacle distance is smaller than the trigger distance.

In this context, an obstacle may be any type of object that is present in the surroundings of the vehicle. Of course, also other vehicles may form obstacles. The obstacle distance may be determined by known methods, e.g. using a camera unit, a radar unit or a lidar unit. Using the braking distance estimate, actions may be triggered based thereon with high accuracy. This has the effect that undesired collisions of the vehicle with the obstacle are avoided. This can be done by triggering a braking maneuver or a steering maneuver of the vehicle. Altogether, road safety is increased.

In an example, also the braking distance uncertainty information may be used. In this context, an action is only triggered, if the braking distance uncertainty is below a predefined threshold. In simplified words, the braking distance estimate is only used, if it is of a sufficient reliability. Otherwise, it is disregarded. The driver of the vehicle may be informed about that and may be requested to manually operate the vehicle.

In an example, triggering an action comprises triggering a warning message for a driver and/or triggering an autonomous braking maneuver. Using the warning message, the driver may be informed about a potentially dangerous situation. By triggering an autonomous braking maneuver, a collision of the vehicle with the obstacle is actively avoided. It is noted that different trigger distances and safety distances may be used for the warning message and the autonomous braking maneuver.

In an example, the safety distance is a function of at least one of a current vehicle speed and a braking distance uncertainty information. In general terms, the safety distance is increased if the current vehicle speed is higher. The safety distance is also increased if a braking distance uncertainty information relates to a high uncertainty. In both cases a probability of collision is reduced and road safety is increased.

The methods of the present invention may be at least partly computer-implemented, and may be implemented in software or in hardware, or in software and hardware. Further, the methods may be carried out by computer program instructions running on means that provide data processing functions. The data processing means may be suitable computing means, such as an electronic control module etc., which may be a distributed or centralized computer system. The data processing means or the computer, respectively, may comprise one or more of a processor, a memory, a data interface, or the like.

According to a third aspect, there is provided a data processing apparatus comprising means for carrying out the steps of at least one of the methods of the claimed invention. Thus, very detailed, and consequently realistic, friction information may be used for determining a braking distance estimate of high accuracy. The braking distance estimate may be used to trigger actions of the vehicle in an accurate and reliable manner.

According to a fourth aspect, there is provided a computer program comprising instructions which, when the program is executed by a computer, cause the computer to carry out the steps of at least one of the methods of the claimed invention. Using such a computer program, very detailed, and consequently realistic, friction information may be processed for determining a braking distance estimate of high accuracy. The braking distance estimate may be used to trigger actions of the vehicle in an accurate and reliable manner.

According to a fifth aspect, which is not part of the present invention, there is provided a computer-readable storage medium comprising instructions which, when executed by a computer, cause the computer to carry out at least one of the methods of the claimed invention. Consequently, very detailed, and consequently realistic, friction information may be used for determining a braking distance estimate of high accuracy. The braking distance estimate may be used to trigger actions of the vehicle in an accurate and reliable manner.

It should be noted that the above examples may be combined with each other irrespective of the aspect involved.

These and other aspects of the present invention disclosure will become apparent from and elucidated with reference to the examples described hereinafter, wherein the present invention is defined by the appended claims.

Examples of the invention will be described in the following with reference to the following drawings.

Figure 1    shows a vehicle travelling along a trajectory on a roadway at a known current vehicle speed, wherein the vehicle comprises two data processing apparatuses according to the present invention, two computer-readable storage media which is not part of the claimed invention, and two computer programs according to the present invention such that the vehicle is configured to carry a method for determining a braking distance estimate according to the present invention and a method for operating a driver assistance system according to the present invention,

Figure 2    illustrates steps of the method for determining a braking distance estimate according to the present invention, and

Figure 3    illustrates steps of the method for operating a driver assistance system according to the present invention.

The Figures are merely schematic representations and serve only to illustrate examples of the present invention.

Identical or equivalent elements are in principle provided with the same reference signs.

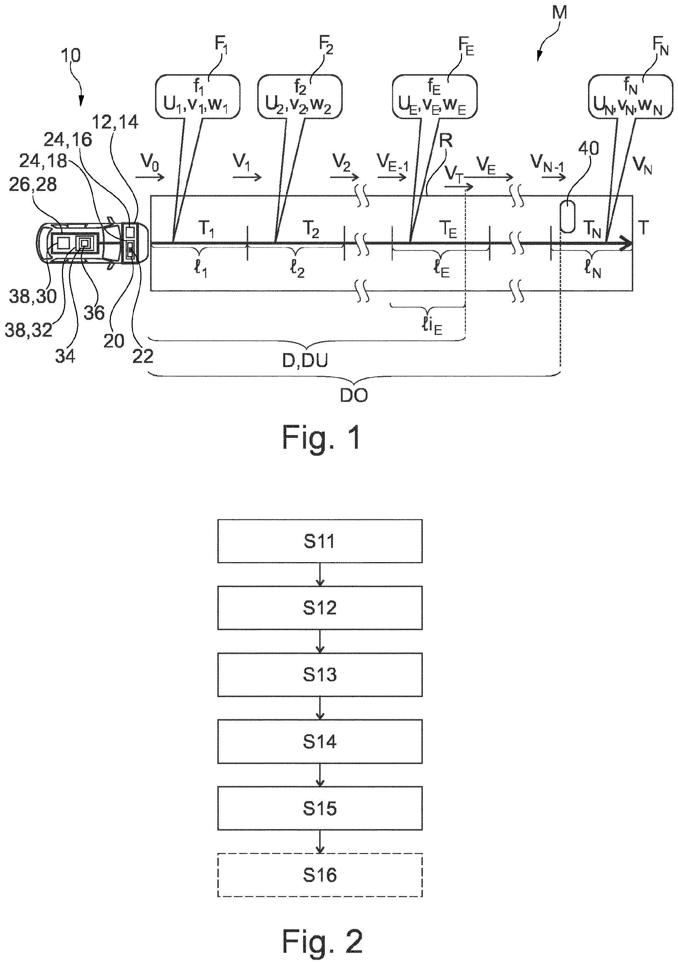

Figure 1 shows a vehicle 10.

The vehicle 10 is travelling along a trajectory T on a roadway R at a known current vehicle speed $V_0$.

It is noted that in the representation of Figure 1, the trajectory T is straight for the ease of explanation only. Of course, the trajectory T may as well comprise curves and turns.

The vehicle 10 comprises a driver assistance system 12 with a first data processing apparatus 14. The first data processing apparatus 14 comprises a first data processing unit 16 and a first data storage unit 18.

The first data storage unit 18 comprises a first computer-readable storage medium 20.

On the first computer-readable storage medium 20, i.e. on the first data storage unit 18, there is provided a first computer program 22.

The first computer program 22 and the first computer-readable storage medium 20 comprise instructions which, when the computer program 22 is executed by the first data processing unit 16 or more generally a computer, cause the first data processing unit 16 or the computer to carry out the steps of a methods for operating a driver assistance system. This method will be explained in detail further below.

Thus, the first data processing unit 16 and the first data storage unit 18 form means 24 to carry out the steps of a method for operating a driver assistance system.

The driver assistance system 12 is for example an autonomous braking system such as an emergency braking system.

The vehicle 10 additionally comprises a braking distance estimation system 26 with a second data processing apparatus 28. The second data processing apparatus 28 comprises a second data processing unit 30 and a second data storage unit 32.

The second data storage unit 32 comprises a second computer-readable storage medium 34.

On the second computer-readable storage medium 34, i.e. on the second data storage unit 32, there is provided a second computer program 36.

The second computer program 36 and the second computer-readable storage medium 34 comprise instructions which, when the computer program 36 is executed by the second data processing unit 30 or more generally a computer, cause the second data processing unit 30 or the computer to carry out the steps of a method for determining a braking distance estimate for a vehicle. This method will be explained in detail further below.

Thus, the second data processing unit 30 and the second data storage unit 32 form means 38 to carry out the steps of the method for determining a braking distance estimate for a vehicle, in the present example for the vehicle 10.

The driver assistance system 12 and the braking distance estimation system 26 are communicatively connected such that a braking distance estimate as determined by the braking distance estimation system 26 can be provided to the driver assistance system 12 and used therein.

It is noted that even though the driver assistance system 12 and the braking distance estimation system 26 are explained as separate systems, the driver assistance system 12 and the braking distance estimation system 26 may be integrated, i.e. a single system may be configured to act as both the driver assistance system 12 and the braking distance estimation system 26.

In the following, the method for determining a braking distance estimate D for the vehicle 10 will be explained in detail making reference to Figures 1 and 2.

As has already been explained before, the vehicle 10 is travelling along the trajectory T on the roadway R at a known current vehicle speed $V_0$.

The braking distance estimate D is to be understood as an estimate of a distance along the trajectory T needed by the vehicle 10 for reducing the current vehicle speed $V_0$ to a target vehicle speed $V_T$ using the vehicle's braking system.

It is noted that the target vehicle speed $V_T$ may be any speed below the current vehicle speed $V_0$. For the ease of explanation, it will be assumed that in the present example, the target vehicle speed $V_T$ is zero. This means that the vehicle 10 shall be stopped. In other examples, the target vehicle speed $V_T$ may assume a value between zero and the current vehicle speed $V_0$.

In a first step S11, a friction information $F_1$, $F_2$, ..., $F_N$ is received for each of a plurality of trajectory segments $T_1$, $T_2$, ..., $T_N$ lying ahead of the vehicle 10 along the trajectory T.

The friction information $F_1$, $F_2$, ..., $F_N$, comprises a segment-specific friction coefficient $f_1$, $f_2$, ..., $f_N$ and a length $l_1$, $l_2$, ..., $l_N$ of each trajectory segment $T_1$, $T_2$, ..., $T_N$. This information is known. It may be either provided by a sensor system of the vehicle 10 or by a provider external to the vehicle 10, e.g. via a cloud application. The friction coefficient $f_1$, $f_2$, ..., $f_N$ and the length $l_1$, $l_2$, ..., $l_N$ may vary between the trajectory segments $T_1$, $T_2$, ..., $T_N$. For the friction coefficients $f_1$, $f_2$, ..., $f_N$, this may be due to different road conditions and/or different weather conditions.

In the present example, the friction information $F_1$, $F_2$, ..., $F_N$ is received in the form of a friction map M. This means that at least the trajectory T on which the vehicle 10 is traveling and the corresponding trajectory segments $T_1$, $T_2$, ..., $T_N$ together with the relevant friction information $F_1$, $F_2$, ..., $F_N$ are provided in the form of a map. Also, trajectories that have been traveled in the past or are available for being traveled in the future may form part of the friction map M.

The friction map M may be integrated into a map being used by a navigation system of the vehicle 10. For example, the friction map M may form one out of several layers in this map.

While the vehicle 10 is traveling along the trajectory T, the friction information $F_1$, $F_2$, ..., $F_N$ is constantly updated such that it is always up-to-date.

In a second step S12, a segment end speed $V_1$, $V_2$, ..., $V_E$ is calculated for a subset $T_1$, $T_2$, ..., $T_E$ of the trajectory segments $T_1$, $T_2$, ..., $T_N$.

The calculation is started in segment $T_1$ which is the segment being located adjacent to the vehicle 10. The segment $T_1$ may be called a starting segment. Once the segment end speed $V_1$ of the segment $T_1$ is known, the segment end speed $V_2$ of segment $T_2$ is calculated. Thereafter, the segment end speed $V_3$ is calculated for segment $T_3$ and so on. In other words, the segment end speeds $V_1$, $V_2$, ..., $V_E$ are calculated in an iterative manner.

It is important to note that this calculation is only possible for a connected subset $T_1$, $T_2$, ..., $T_E$ of the plurality of trajectory segments $T_1$, $T_2$, ..., $T_N$.

The calculation of the segment end speeds $V_1$, $V_2$, ..., $V_E$ is stopped once a segment end speed $V_E$ has been calculated which equals the target vehicle speed $V_T$ or is lower than the target vehicle speed $V_T$.

The trajectory segment $T_E$ for which a segment end speed $V_E$ has been calculated which equals the target vehicle speed $V_T$ or is lower than the target vehicle speed $V_T$ is called an end segment $T_E$.

For the calculation of the segment end speeds $V_1$, $V_2$, ..., $V_E$, a balance of energy is used for each of the trajectory segments $T_1$, $T_2$, ..., $T_E$. In the present example, kinetic energy and friction energy is considered in this balance of energy.

For each trajectory segment $T_1$, $T_2$, ..., $T_E$, the balance of energy reads:

$$\frac{1}{2}mV_{i+1}^2 = \frac{1}{2}mV_i^2 - ml_if_ig$$

In this context, m is the mass of the vehicle 10. The index i indicates a first trajectory segment $T_i$ and consequently index i +1 indicates a trajectory segment $T_{i+1}$ being adjacent to the first trajectory segment $T_i$ along a traveling direction of the vehicle 10. Letter g is the gravity constant. For the calculation of the first segment end speed $V_1$, i.e. i=1, the current vehicle speed $V_0$ is used.

Using the above equation, the segment end speed $V_1$, $V_2$, ..., $V_E$ may be calculated for each of the trajectory segments $T_1$, $T_2$, ..., $T_E$.

In the present example, it is assumed that for the end segment $T_E$ a negative end speed $V_E$ has been calculated. This means that somewhere within the end segment $T_E$ the vehicle 10 reaches the target speed $V_T$ which his zero in the present example.

In a subsequent step S13, an intra-segment length $li_E$ within the end segment $T_E$ is determined. The intra-segment length $li_E$ defines a position within the end segment $T_E$ where the vehicle 10 has the target vehicle speed $V_T$, in the present example zero.

Also in this step, a balance of energy is established. This balance reads:

$$mli_E f_E g = \frac{1}{2} m V_{E-1}^2 - \frac{1}{2} m V_T^2$$

In this context, $V_{E-1}$ is the segment end speed of the segment $T_{E-1}$ located upstream the end segment $T_E$ along the travelling direction of the vehicle 10. The target vehicle speed $V_T$ is zero in the present case.

Thereafter, in a step S14, the braking distance estimate D may be determined as the sum of the lengths $l_1$, $l_2$, ..., $l_{E-1}$ of the trajectory segments $T_1$, $T_2$,..., $T_{E-1}$ having a segment end speed $V_1$, $V_2$,..., $V_{E-1}$ exceeding the target vehicle speed $V_T$ and the intra-segment length $li_E$. The corresponding formula reads:

$$D = li_E + \sum_{i=1}^{i=E-1} l_i$$

In a step S15 the braking distance estimate D is stored on the second data storage unit 32. Also intermediate results of the above calculations may be stored on the second data storage unit 32.

Next, a variant of the method explained above will be described.

It is noted that only the differences with respect to the method described above will be explained. For the remaining aspects, reference is made to the above explanations.

In this variant, the friction information $F_1$, $F_2$,..., $F_N$ additionally comprises a friction uncertainty information $U_1$, $U_2$, ..., $U_N$.

In the present example, the friction uncertainty information $U_1$, $U_2$, ..., $U_N$ comprises a friction deviation measure which is formed by a positive deviation measure $v_1$, $v_2$, ..., $v_N$ and a negative deviation measure $w_1$, $w_2$, ..., $w_N$. Both the positive deviation measure and the negative deviation measure are to be understood as variations of the friction coefficient $f_1$, $f_2$, ..., $f_N$.

Consequently, in this variant, a bandwidth for the friction coefficient $f_1$, $f_2$, ..., $f_N$ is provided for each trajectory segment $T_1$, $T_2$, ..., $T_N$.

For example, in trajectory segment $T_1$, the friction coefficient $f_1$ may vary between $f_1-w_1$ and $f_1+v_1$. The same applies to the remaining trajectory segments $T_2$, ..., $T_N$.

The friction uncertainty information $U_1$, $U_2$, ..., $U_N$ also forms part of the friction map M and is received in step S11.

Also in the present variant, steps S12 to S15 are performed using the friction coefficients $f_1$, $f_2$, ..., $f_N$ as has been explained above.

Beyond that, in a step S16, a braking distance uncertainty information DU is determined based on the friction uncertainty information $U_1$, $U_2$, ..., $U_N$.

In this step S16, a further segment end speed is calculated for each trajectory segment $T_1$, $T_2$, ..., $T_E$ as has been explained above in connection with step S12.

Also, a further intra-segment length $li_E$ is determined within the end segment $T_E$ as has been explained above in connection with step S13.

However, now a lower friction coefficient $f_{low}$ is used for each trajectory segment $T_1$, $T_2$, ..., $T_E$. In the present example, the lower friction coefficient $f_{low}$ refers to the friction coefficient which can be calculated by $f_i-w_i$ for each trajectory segment $T_i$. In simplified words, the calculations of steps S12 and S13 are performed, wherein for each segment $T_1$, $T_2$, ..., $T_E$ the lowest available friction coefficient is used.

Additionally, also in step S16, the calculations according to steps S12 and S13 are performed using a higher friction coefficient $f_{high}$. In the present example, the higher friction coefficient refers to the friction coefficient which can be calculated by $f_i+v_i$ for each trajectory segment $T_i$. In simplified words, the calculations of steps S12 and S13 are performed, wherein for each segment $T_1$, $T_2$, ..., $T_E$ the highest available friction coefficient is used.

Consequently, two additional braking distance estimates D can be calculated as indicated in connection with step S14 above. Out of these additional two braking distance estimates, one is higher and one is lower than the braking distance estimate D which has been calculated using the friction coefficients $f_1$, $f_2$, ..., $f_E$.

Thus, also the braking distance uncertainty information DU may be expressed by a deviation measure which may be formed by a positive deviation from the braking distance estimate D and a negative deviation from the braking distance estimate D.

In other words, a bandwidth or range of braking distance estimates may be determined.

Depending on the variant used, the braking distance estimate D or the bandwidth of braking distance estimates D may be provided to the driving assistance system 12.

In a case in which the bandwidth or range of the braking distance estimates D exceeds a predefined braking distance uncertainty threshold, it is also possible to trigger a reduction of the current vehicle speed $V_0$. Alternatively or additionally, more accurate friction information $F_1$, $F_2$,..., $F_N$ may be requested. This means that friction information $F_1$, $F_2$,..., $F_N$ comprising a friction uncertainty information relating to a reduced uncertainty is requested.

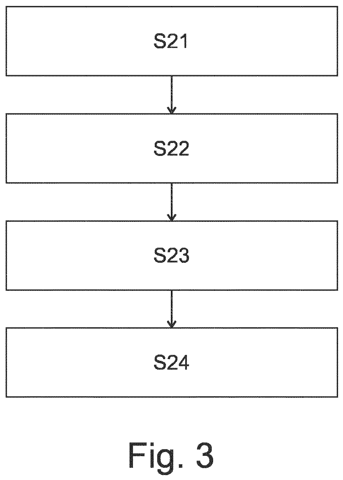

In the following, the method for operating a driver assistance system of the vehicle 10 will be explained in detail making reference to Figures 1 and 3.

In a first step S21 of the method for operating a driver assistance system of a vehicle, the braking distance estimate D having been determined using the method for determining a braking distance estimate is received.

The braking distance estimate D may be accompanied by a braking distance uncertainty information DU.

Based thereon, in a step S22, a trigger distance DT is calculated as a sum of the braking distance estimate D and a safety distance S.

The safety distance S may be a function of at least one of a current vehicle speed $V_0$ and the braking distance uncertainty information DU.

This means that the faster the vehicle 10 is traveling and the higher the level of uncertainty in respect of the braking distance estimate D, the bigger the safety distance S.

Analogously, the smaller the current vehicle speed $V_0$ and the smaller the uncertainty relating to the braking distance estimate D, the smaller the safety distance S.

It is also possible to define different safety distances for different kinds of actions to be triggered. This will be explained below.

Moreover, in a step S23, an obstacle distance DO may be determined or received.

The obstacle distance DO is a distance between the vehicle 10 and an obstacle 40, e.g. a vehicle travelling in front of the vehicle 10 or an object lying on the roadway R.

In a step S24, the obstacle distance DO and the trigger distance DT are compared.

An action may be triggered, if the obstacle distance DO is smaller than the trigger distance DT.

In an example, triggering the action comprises triggering a warning message for a driver of the vehicle 10. In other words, the driver is warned that he or she is very close to the obstacle 40.

Alternatively or additionally, triggering the action may comprise triggering an autonomous braking maneuver. This means that the vehicle 10 is decelerated by autonomously engaging the vehicle's braking system. As before, the vehicle 10 may be decelerated until it reaches a target speed $V_T$. The target speed $V_T$ can be zero or any speed value between the current vehicle speed $V_0$ and zero.

In this example, a first safety distance $S_1$ being associated with the triggering of a warning message, may be bigger than a second safety distance $S_2$ being associated with the triggering of an autonomous braking maneuver.

Thus, a driver of the vehicle 10 first receives a warning message. If the driver does not react thereto and continues traveling at the current vehicle speed $V_0$, the autonomous braking maneuver is triggered.

Other variations to the disclosed examples can be understood and effected by those skilled in the art in practicing the claimed invention. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

LIST OF REFERENCE SIGNS

| | |
|---|---|
| 10 | vehicle |
| 12 | driver assistance system |
| 14 | first data processing apparatus |
| 16 | first data processing unit |
| 18 | first data storage unit |
| 20 | first computer-readable storage medium |
| 22 | first computer program |
| 24 | means to carry out the steps of a method for operating a driver assistance system |
| 26 | braking distance estimation system |
| 28 | second data processing apparatus |
| 30 | second data processing unit |
| 32 | second data storage unit |
| 34 | second computer-readable storage medium |
| 36 | second computer program |
| 38 | means to carry out the steps of the method for determining a braking distance estimate |
| 40 | obstacle |

| | |
|---|---|
| D | braking distance estimate |
| DO | obstacle distance |
| DT | trigger distance |
| DU | braking distance uncertainty information |
| $f_1, f_2, ..., f_N$ | friction coefficient |
| $F_1, F_2, ..., F_N$ | friction information |
| $f_{low}$ | lower friction coefficient |
| $f_{high}$ | higher friction coefficient |
| $l_1, l_2, ..., l_N$ | length |
| $li_E$ | intra-segment length of the end segment |
| M | friction map |
| R | roadway |
| S | safety distance |
| S1 | first safety distance |
| S2 | second safety distance |
| S11 | first step of the method for determining a braking distance |
| S12 | second step of the method for determining a braking distance |

| S13 | third step of the method for determining a braking distance |
| S14 | fourth step of the method for determining a braking distance |
| S15 | fifth step of the method for determining a braking distance |
| S16 | sixth step of the method for determining a braking distance |
| S21 | first step of the method for operating a driver assistance system |
| S22 | second step of the method for operating a driver assistance system |
| S23 | third step of the method for operating a driver assistance system |
| S24 | fourth step of the method for operating a driver assistance system |
| T | trajectory |
| $T_1, T_2, ..., T_N$ | trajectory segment |
| $T_1$ | starting segment |
| $T_E$ | end segment |
| $U_1, U_2, ..., U_N$ | friction uncertainty information |
| $V_E$ | segment end speed of end segment |
| $V_0$ | current vehicle speed |
| $V_1, V_2, ..., V_N$ | segment end speed |
| $V_T$ | target vehicle speed |
| $v_1, v_2, ..., v_N$ | positive deviation measure |
| $w_1, w_2, ..., w_N$ | negative deviation measure |

**Claims**

1. A method for determining a braking distance estimate (D) for a vehicle (10) travelling along a trajectory (T) on a roadway (R) at a known current vehicle speed ($V_0$), wherein the braking distance estimate (D) is an estimate of a distance along the trajectory (T) needed by the vehicle (10) for reducing the current vehicle speed ($V_0$) to a target vehicle speed ($V_T$) while a braking system is activated, comprising:

   - receiving a friction information ($F_1, F_2, ..., F_N$) for each of a plurality of trajectory segments ($T_1, T_2, ..., T_N$) lying ahead of the vehicle (10), wherein the friction information ($F_1, F_2, ..., F_N$) comprises a segment-specific friction coefficient ($f_1, f_2, ..., f_N$) and wherein a length ($l_1, l_2, ..., l_N$) of each trajectory segment ($T_1, T_2, ..., T_N$) is known (S11),
   - calculating a segment end speed ($V_1, V_2, ..., V_E$) for each trajectory segment ($T_1, T_2, ..., T_E$) of a connected subset of the plurality of trajectory segments ($T_1, T_2, ..., T_N$) starting from a starting segment ($T_1$) being located adjacent to the vehicle (10) until for an end segment ($T_E$) a segment end speed ($V_E$) is determined which equals the target vehicle speed ($V_T$) or is lower than the target vehicle speed ($V_T$) (S12), wherein calculating a segment end speed ($V_1, V_2, ...,$

$V_E$) for each trajectory segment ($T_1, T_2, ..., T_E$) of a connected subset of the plurality of trajectory segments ($T_1, T_2, ..., T_N$) is based on the corresponding friction information ($F_1, F_2, ..., F_N$),
   - determining an intra-segment length ($li_E$) within the end segment ($T_E$), wherein the intra-segment length ($li_E$) defines a position where the vehicle (10) has the target vehicle speed ($V_T$) (S13), and
   - determining the braking distance estimate (D) as the sum of the lengths ($l_1, l_2, ..., l_{E-1}$) of the trajectory segments ($T_1, T_2, ..., T_{E-1}$) having a segment end speed ($V_1, V_2, ..., V_{E-1}$) exceeding the target vehicle speed ($V_T$) and the intra-segment length ($li_E$) (S14).

2. The method of claim 1, wherein calculating the segment end speed ($V_1, V_2, ..., V_E$) for each trajectory segment ($T_1, T_2, ..., T_E$) of the connected subset of the plurality of trajectory segments ($T_1, T_2, ..., T_N$) comprises applying a balance of energy for each of the trajectory segments ($T_1, T_2, ..., T_E$) of the subset.

3. The method of claim 1 or 2, wherein determining the intra-segment length ($li_E$) comprises applying a balance of energy.

4. The method of any one of the preceding claims, wherein the friction information ($F_1, F_2, ..., F_N$) is received in the form of a friction map (M).

5. The method of any one of the preceding claims, wherein the friction information ($F_1, F_2, ..., F_N$) comprises a friction uncertainty information ($U_1, U_2, ..., U_N$).

6. The method of claim 5, wherein the friction uncertainty information ($U_1, U_2, ..., U_N$) comprises a friction deviation measure ($v_1, v_2, ... v_N, w_1, w_2, ..., w_N$).

7. The method of claim 5 or 6, further comprising determining a braking distance uncertainty information (DU) based on the friction uncertainty information ($U_1, U_2, ..., U_N$) (S16).

8. The method of claim 7, wherein determining a braking distance uncertainty information (DU) comprises:

   - calculating a segment end speed ($V_1, V_2, ..., V_E$) for each trajectory segment ($T_1, T_2, ..., T_E$) of a connected subset of the plurality of trajectory segments ($T_1, T_2, ..., T_N$) starting from the starting segment ($T_1$) located adjacent to the vehicle (10) until for an end segment ($T_E$) a segment end speed ($V_E$) is determined which equals the target vehicle speed ($V_T$) or is lower than the target vehicle speed ($V_T$), wherein a lower friction coefficient ($f_{low}$) is used for each trajectory segment ($T_1$, $T_2$, ..., $T_E$), and

- calculating a segment end speed ($V_1$, $V_2$, ..., $V_E$) for each trajectory segment ($T_1$, $T_2$, ..., $T_E$) of a connected subset of the plurality of trajectory segments ($T_1$, $T_2$, ..., $T_N$) starting from the starting segment ($T_1$) located adjacent to the vehicle (10) until for an end segment ($T_E$) a segment end speed ($V_E$) is determined which equals the target vehicle speed ($V_T$) or is lower than the vehicle target speed ($V_T$), wherein a higher friction coefficient ($f_{high}$) is used for each trajectory segment ($T_1$, $T_2$, ..., $T_E$).

9. The method of claim 7 or 8, further comprising triggering a reduction of the current vehicle speed ($V_0$) or requesting friction information ($F_1$, $F_2$, ..., $F_N$) comprising a friction uncertainty information ($U_1$, $U_2$, ..., $U_N$) relating to a reduced uncertainty, if the braking distance uncertainty information (DU) exceeds a predefined braking distance uncertainty threshold.

10. The method of any one of the preceding claims, further comprising storing the braking distance estimate (D) (S15).

11. A method for operating a driver assistance system (12) of a vehicle (10), comprising:

- receiving a braking distance estimate (D) having been determined using the method of any one of the preceding claims or determining a braking distance estimate (D) using the method of any one of the preceding claims,
- calculating a trigger distance (DT) as a sum of the braking distance estimate (D1) and a safety distance (S, S1, S2),
- receiving or determining an obstacle distance (DO) being a distance between the vehicle (10) and an obstacle (40), and
- triggering an action if the obstacle distance (DO) is smaller than the trigger distance (DT).

12. The method of claim 11, wherein triggering an action comprises triggering a warning message for a driver and/or triggering an autonomous braking maneuver.

13. The method of claim 11 or 12, wherein the safety distance (S, S1, S2) is a function of at least one of a current vehicle speed ($V_0$) and a braking distance uncertainty information (DU).

14. A data processing apparatus (14, 28) comprising means (24, 38) for carrying out the steps of at least one of the methods of the preceding claims.

15. A computer program (22, 36) comprising instructions which, when the program (22, 36) is executed by a computer, cause the computer to carry out the steps of at least one of the methods of claims 1 to 13.

**Patentansprüche**

1. Verfahren zum Bestimmen einer Bremswegschätzung (D) für ein Fahrzeug (10), das entlang einer Trajektorie (T) auf einer Fahrbahn (R) mit einer bekannten momentanen Fahrzeuggeschwindigkeit ($V_0$) fährt, wobei die Bremswegschätzung (D) eine Schätzung eines Weges entlang der Trajektorie (T) ist, den das Fahrzeug (10) benötigt, um die momentane Fahrzeuggeschwindigkeit ($V_0$) auf eine Zielfahrzeuggeschwindigkeit ($V_T$) zu reduzieren, während ein Bremssystem aktiviert ist, umfassend:

- Empfangen einer Reibungsinformation ($F_2$, $F_2$, ..., $F_N$) für jedes von mehreren Trajektoriesegmenten ($T_1$, $T_2$, ..., $T_N$), die dem Fahrzeug (10) voraus liegen, wobei die Reibungsinformation ($F_2$, $F_2$, ..., $F_N$) einen segmentspezifischen Reibungskoeffizienten ($f_2$, $f_2$, ..., $f_N$) umfasst und wobei eine Länge ($l_1$, $l_2$, ..., $l_N$) jedes Trajektoriesegments ($T_1$, $T_2$, ..., $T_N$) bekannt ist (S11),
- Berechnen einer Segmentendgeschwindigkeit ($V_1$, $V_2$, ..., $V_E$) für jedes Trajektoriesegment ($T_1$, $T_2$, ..., $T_E$) einer verbundenen Teilmenge der mehreren Trajektoriesegmente ($T_1$, $T_2$, ..., $T_N$), ausgehend von einem Startsegment ($T_1$), das sich neben dem Fahrzeug (10) befindet, bis für ein Endsegment ($T_E$) eine Segmentendgeschwindigkeit ($V_E$) bestimmt wird, die gleich der Zielfahrzeuggeschwindigkeit ($V_T$) ist oder kleiner als die Zielfahrzeuggeschwindigkeit ($V_T$) ist (S12), wobei das Berechnen einer Segmentendgeschwindigkeit ($V_1$, $V_2$, ..., $V_E$) für jedes Trajektoriesegment ($T_1$, $T_2$, ..., $T_E$) einer verbundenen Teilmenge der mehreren Trajektoriesegmente ($T_1$, $T_2$, ..., $T_N$) auf der entsprechenden Reibungsinformation ($F_1$, $F_2$, ..., $F_N$) basiert,
- Bestimmen einer Intra-Segmentlänge ($li_E$) innerhalb des Endsegments ($T_E$), wobei die Intra-Segmentlänge ($li_E$) eine Position definiert, an der das Fahrzeug (10) die Zielfahrzeuggeschwindigkeit ($V_T$) hat (S13), und
- Bestimmen des Bremswegschätzung (D) als die Summe der Längen ($l_1$, $l_2$, ..., $1_{E-1}$) der Trajektoriesegmente ($T_1$, $T_2$, ..., $T_{E-1}$), deren Segmentendgeschwindigkeit ($V_1$, $V_2$, ..., $V_{E-1}$) die Fahrzeugzielgeschwindigkeit ($V_T$) übersteigt, und der Intra-Segmentlänge ($li_E$) (S14).

2. Verfahren nach Anspruch 1, wobei das Berechnen der Segmentendgeschwindigkeit ($V_2$, $V_2$, ..., $V_E$) für jedes Trajektoriesegment ($T_1$, $T_2$, ..., $T_E$) der verbundenen Teilmenge der mehreren Trajektoriesegmen-

te ($T_1$, $T_2$, ..., $T_N$) das Anwenden einer Energiebilanz für jedes der Trajektoriesegmente ($T_1$, $T_2$, ..., $T_E$) der Teilmenge umfasst.

3. Verfahren nach Anspruch 1 oder 2, wobei das Bestimmen der Intra-Segmentlänge ($li_E$) das Anwenden einer Energiebilanz umfasst.

4. Verfahren nach einem der vorangehenden Ansprüche, wobei die Reibungsinformation ($F_1$, $F_2$, ..., $F_N$) in Form einer Reibungskarte (M) empfangen wird.

5. Verfahren nach einem der vorangehenden Ansprüche, wobei die Reibungsinformation ($F_2$, $F_2$, ..., $F_N$) eine Reibungsungewissheitsinformation ($U_1$, $U_2$, ..., $U_N$) umfasst.

6. Verfahren nach Anspruch 5, wobei die Reibungsungewissheitsinformation ($U_1$, $U_2$, ..., $U_N$) ein Reibungsabweichungsmaß ($v_1$, $v_2$, ...$v_N$, $w_2$, $w_2$, ..., $w_N$) umfasst.

7. Verfahren nach Anspruch 5 oder 6, umfassend des Weiteren das Bestimmen einer Bremswegungewissheitsinformation (DU) auf der Grundlage der Reibungsungewissheitsinformation ($U_1$, $U_2$, ..., $U_N$) (S16).

8. Verfahren nach Anspruch 7, wobei das Bestimmen einer Bremswegungewissheitsinformation (DU) umfasst:

   - Berechnen einer Segmentendgeschwindigkeit ($V_1$, $V_2$, ..., $V_E$) für jedes Trajektoriesegment ($T_1$, $T_2$, ..., $T_E$) einer verbundenen Teilmenge der mehreren Trajektoriesegmente ($T_1$, $T_2$, ..., $T_N$), ausgehend von einem Startsegment ($T_1$), das sich neben dem Fahrzeug (10) befindet, bis für ein Endsegment ($T_E$) eine Segmentendgeschwindigkeit ($V_E$) bestimmt wird, die gleich der Zielfahrzeuggeschwindigkeit ($V_T$) ist oder kleiner als die Zielfahrzeuggeschwindigkeit ($V_T$) ist, wobei für jedes Trajektoriesegment ($T_1$, $T_2$, ..., $T_E$) ein niedrigerer Reibungskoeffizient ($f_{low}$) verwendet wird, und
   - Berechnen einer Segmentendgeschwindigkeit ($V_1$, $V_2$, ..., $V_E$) für jedes Trajektoriesegment ($T_1$, $T_2$, ..., $T_E$) einer verbundenen Teilmenge der mehreren Trajektoriesegmente ($T_1$, $T_2$, ..., $T_N$), ausgehend von dem Startsegment ($T_1$), das sich neben dem Fahrzeug (10) befindet, bis für ein Endsegment ($T_E$) eine Segmentendgeschwindigkeit ($V_E$) bestimmt wird, die gleich der Zielfahrzeuggeschwindigkeit ($V_T$) ist oder kleiner als die Zielfahrzeuggeschwindigkeit ($V_T$) ist (S12), wobei für jedes Trajektoriesegment ($T_1$, $T_2$, ..., $T_E$) ein höherer Reibungskoeffizient ($f_{high}$) verwendet wird.

9. Verfahren nach Anspruch 7 oder 8, umfassend des Weiteren das Auslösen einer Verringerung der momentanen Fahrzeuggeschwindigkeit ($V_0$) oder das Anfordern einer Reibungsinformation ($F_2$, $F_2$, ..., $F_N$), die eine Reibungsungewissheitsinformation ($U_1$, $U_2$, ..., $U_N$) umfasst, die sich auf eine verringerte Ungewissheit bezieht, falls die Bremswegungewissheitsinformation (DU) eine vordefinierte Bremswegungewissheitsschwelle überschreitet.

10. Verfahren nach einem der vorangehenden Ansprüche, umfassend des Weiteren das Speichern der Bremswegschätzung (D) (S15).

11. Verfahren zum Betreiben eines Fahrerassistenzsystems (12) eines Fahrzeugs (10), umfassend:

    - Empfangen einer Bremswegschätzung (D), die unter Verwendung des Verfahrens nach einem der vorangehenden Ansprüche bestimmt wurde, oder Bestimmen einer Bremswegschätzung (D) unter Verwendung des Verfahrens nach einem der vorangehenden Ansprüche,
    - Berechnen einer Auslöserdistanz (DT) als eine Summe aus der Bremswegschätzung (D1) und einem Sicherheitsabstand (S, S1, S2),
    - Empfangen oder Bestimmen einer Hindernisdistanz (DO), die eine Distanz zwischen dem Fahrzeug (10) und einem Hindernis (40) ist, und
    - Auslösen einer Aktion, falls die Hindernisdistanz (DO) kleiner ist als die Auslöserdistanz (DT).

12. Verfahren nach Anspruch 11, wobei das Auslösen einer Aktion das Auslösen einer Warnmeldung für einen Fahrer und/oder das Auslösen eines autonomen Bremsmanövers umfasst.

13. Verfahren nach Anspruch 11 oder 12, wobei der Sicherheitsabstand (S, S1, S2) eine Funktion von mindestens einem der momentanen Fahrzeuggeschwindigkeit ($V_0$) und einer Bremswegungewissheitsinformation (DU) ist.

14. Datenverarbeitungsvorrichtung (14, 28), umfassend ein Mittel (24, 38) zum Ausführen der Schritte mindestens eines der Verfahren der vorangehenden Ansprüche.

15. Computerprogramm (22, 36), umfassend Instruktionen, die, wenn das Programm (22, 36) durch einen Computer ausgeführt wird, den Computer veranlassen, die Schritte mindestens eines der Verfahren der Ansprüche 1 bis 13 auszuführen.

**Revendications**

1. Procédé permettant de déterminer une estimation de distance de freinage (D) pour un véhicule (10) se déplaçant le long d'une trajectoire (T) sur une route (R) à une vitesse de véhicule actuelle connue ($V_0$), dans lequel l'estimation de distance de freinage (D) est une estimation d'une distance le long de la trajectoire (T) nécessaire au véhicule (10) pour réduire la vitesse de véhicule actuelle ($V_0$) à une vitesse de véhicule cible ($V_T$) pendant qu'un système de freinage est activé, comprenant :

   - la réception d'informations de friction ($F_1$, $F_2$, ..., $F_N$) pour chacun d'une pluralité de segments de trajectoire ($T_1$, $T_2$, ..., $T_N$) se trouvant devant le véhicule (10), dans lequel les informations de friction ($F_2$, $F_2$, ..., $F_N$) comprennent un coefficient de friction spécifique au segment ($F_2$, $F_2$, ..., $F_N$) et dans lequel une longueur ($I_1$, $I_2$, ..., $I_N$) de chaque segment de trajectoire ($T_1$, $T_2$, ..., $T_N$) est connue (S11),
   - le calcul d'une vitesse de fin de segment ($V_1$, $V_2$, ..., $V_E$) pour chaque segment de trajectoire ($T_1$, $T_2$, ..., $T_E$) d'un sous-ensemble connecté de la pluralité de segments de trajectoire ($T_1$, $T_2$, ..., $T_N$) à partir d'un segment de départ ($T_1$) situé à côté du véhicule (10) jusqu'à ce que, pour un segment de fin ($T_E$), une vitesse de fin de segment ($V_E$) soit déterminée, qui est égale à la vitesse de véhicule cible ($V_T$) ou est inférieure à la vitesse de véhicule cible ($V_T$) (S12), dans lequel le calcul d'une vitesse de fin de segment ($V_1$, $V_2$, ..., $V_E$) pour chaque segment de trajectoire ($T_1$, $T_2$, ..., $T_E$) d'un sous-ensemble connecté de la pluralité de segments de trajectoire ($T_1$, $T_2$, ..., $T_N$) est basé sur les informations de friction correspondantes ($F_1$, $F_2$, ..., $F_N$),
   - la détermination d'une longueur intra-segment ($li_E$) à l'intérieur du segment de fin ($T_E$), dans lequel la longueur intra-segment ($li_E$) définit une position où le véhicule (10) a la vitesse de véhicule cible ($V_T$) (S13), et
   - la détermination de l'estimation de distance de freinage (D) comme la somme des longueurs ($I_1$, $I_2$, ..., $I_{E-1}$) des segments de trajectoire ($T_1$, $T_2$, ..., $T_{E-1}$) ayant une vitesse de fin de segment ($V_2$, $V_2$, ..., $V_{E-1}$) dépassant la vitesse de véhicule cible ($V_T$) et de la longueur intra-segment ($li_E$) (S14).

2. Procédé selon la revendication 1, dans lequel le calcul de la vitesse de fin de segment ($V_1$, $V_2$, ..., $V_E$) pour chaque segment de trajectoire ($T_1$, $T_2$, ..., $T_E$) du sous-ensemble connecté de la pluralité de segments de trajectoire ($T_1$, $T_2$, ..., $T_N$) comprend l'application d'un bilan d'énergie pour chacun des segments de trajectoire ($T_1$, $T_2$, ..., $T_E$) du sous-ensemble.

3. Procédé selon la revendication 1 ou 2, dans lequel la détermination de la longueur intra-segment ($li_E$) comprend l'application d'un bilan d'énergie.

4. Procédé selon l'une quelconque des revendications précédentes, dans lequel les informations de friction ($F_1$, $F_2$, ..., $F_N$) sont reçues sous la forme d'une carte de friction (M).

5. Procédé selon l'une quelconque des revendications précédentes, dans lequel les informations de friction ($F_1$, $F_2$, ..., $F_N$) comprennent des informations d'incertitude de friction ($U_1$, $U_2$, ... , $U_N$).

6. Procédé selon la revendication 5, dans lequel les informations d'incertitude de friction ($U_1$, $U_2$, ..., $U_N$) comprennent une mesure d'écart de friction ($V_1$, $V_2$, ..., $V_N$, $W_2$, $W_2$, ... , $W_N$).

7. Procédé selon la revendication 5 ou 6, comprenant en outre la détermination d'informations d'incertitude de distance de freinage (DU) sur la base des informations d'incertitude de friction ($U_1$, $U_2$, ..., $U_N$) (S16).

8. Procédé selon la revendication 7, dans lequel la détermination d'informations d'incertitude de distance de freinage (DU) comprend :

   - le calcul d'une vitesse de fin de segment ($V_1$, $V_2$, ..., $V_E$) pour chaque segment de trajectoire ($T_1$, $T_2$, ..., $T_E$) d'un sous-ensemble connecté de la pluralité de segments de trajectoire ($T_1$, $T_2$, ..., $T_N$) à partir du segment de départ ($T_1$) situé à côté du véhicule (10) jusqu'à ce que, pour un segment de fin ($T_E$), une vitesse de fin de segment ($V_E$) soit déterminée, qui est égale à la vitesse de véhicule cible ($V_T$) ou est inférieure à la vitesse de véhicule cible ($V_T$), dans lequel un coefficient de friction ($f_{bas}$) inférieur est utilisé pour chaque segment de trajectoire ($T_1$, $T_2$, ..., $T_E$), et
   - le calcul d'une vitesse de fin de segment ($V_1$, $V_2$, ..., $V_E$) pour chaque segment de trajectoire ($T_1$, $T_2$, ..., $T_E$) d'un sous-ensemble connecté de la pluralité de segments de trajectoire ($T_1$, $T_2$, ..., $T_N$) à partir du segment de départ ($T_1$) situé à côté du véhicule (10) jusqu'à ce que, pour un segment de fin ($T_E$), une vitesse de fin de segment ($V_E$) soit déterminée, qui est égale à la vitesse de véhicule cible ($V_T$) ou est inférieure à la vitesse de véhicule cible ($V_T$), dans lequel un coefficient de friction ($f_{haut}$) supérieur est utilisé pour chaque segment de trajectoire ($T_1$, $T_2$, ..., $T_E$).

**9.** Procédé selon la revendication 7 ou 8, comprenant en outre le déclenchement d'une réduction de la vitesse de véhicule actuelle ($V_0$) ou la demande d'informations de friction ($F_1$, $F_2$, ..., $F_N$) comprenant des informations d'incertitude de friction ($U_1$, $U_2$, ..., $U_N$) relatives à une incertitude réduite, si les informations d'incertitude de distance de freinage (DU) dépassent un seuil d'incertitude de distance de freinage prédéfini.

**10.** Procédé selon l'une quelconque des revendications précédentes, comprenant en outre le stockage de l'estimation de distance de freinage (D) (S15).

**11.** Procédé permettant de faire fonctionner un système d'aide à la conduite (12) d'un véhicule (10), comprenant :

- la réception d'une estimation de distance de freinage (D) ayant été déterminée à l'aide du procédé selon l'une quelconque des revendications précédentes ou la détermination d'une estimation de distance de freinage (D) à l'aide du procédé selon l'une quelconque des revendications précédentes,
- le calcul d'une distance de déclenchement (DT) comme la somme de l'estimation de distance de freinage (D1) et d'une distance de sécurité (S, S1, S2),
- la réception ou la détermination d'une distance d'obstacle (DO) qui est une distance entre le véhicule (10) et un obstacle (40), et
- le déclenchement d'une action si la distance d'obstacle (DO) est inférieure à la distance de déclenchement (DT).

**12.** Procédé selon la revendication 11, dans lequel le déclenchement d'une action comprend le déclenchement d'un message d'avertissement à destination d'un conducteur et/ou le déclenchement d'une manœuvre de freinage autonome.

**13.** Procédé selon la revendication 11 ou 12, dans lequel la distance de sécurité (S, S1, S2) est fonction d'au moins l'un parmi une vitesse de véhicule actuelle ($V_0$) et des informations d'incertitude de distance de freinage (DU).

**14.** Appareil de traitement de données (14, 28) comprenant des moyens (24, 38) pour exécuter les étapes d'au moins l'un des procédés des revendications précédentes.

**15.** Programme informatique (22, 36) comprenant des instructions qui, lorsque le programme (22, 36) est exécuté par un ordinateur, amènent l'ordinateur à exécuter les étapes d'au moins l'un des procédés des revendications 1 à 13.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022140660 A1